(19) Europäisches Patentamt
European Patent Office
Office européen des brevets

(11) **EP 4 102 293 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **22171385.2**

(22) Anmeldetag: **03.05.2022**

(51) Internationale Patentklassifikation (IPC):
**G03B 7/00** *(2021.01)*     **G03B 9/02** *(2021.01)*
**G03B 13/20** *(2021.01)*    **G03B 13/32** *(2021.01)*
**H04N 23/61** *(2023.01)*    **H04N 23/75** *(2023.01)*
**G06V 30/14** *(2022.01)*    **G06V 30/424** *(2022.01)*

(52) Gemeinsame Patentklassifikation (CPC):
**G03B 7/006; G03B 9/02; G03B 13/20; G03B 13/32; G06V 30/1437; G06V 30/424; H04N 23/61; H04N 23/75**

(54) **KAMERA UND VERFAHREN ZUR ERFASSUNG VON DURCH EINEN ERFASSUNGSBEREICH BEWEGTEN OBJEKTEN**

CAMERA AND METHOD FOR DETECTING OBJECTS MOVING THROUGH A SURVEILLANCE AREA

CAMÉRA ET PROCÉDÉ DE DÉTECTION DES OBJETS SE DÉPLAÇANT DANS UNE ZONE DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2021   DE 102021114556**

(43) Veröffentlichungstag der Anmeldung:
**14.12.2022   Patentblatt 2022/50**

(73) Patentinhaber: **SICK AG**
**79183 Waldkirch (DE)**

(72) Erfinder:
• **Strohmeier, Dr. Dirk**
**79312 Emmendingen (DE)**

• **Müller, Dr. Romain**
**79252 Stegen (DE)**

(56) Entgegenhaltungen:
**DE-B3-102020 109 928     JP-A- 2011 151 448**
**US-A1- 2017 310 867     US-B2- 9 936 119**

• **SRINIVASAN PRATUL P ET AL: "Aperture Supervision for Monocular Depth Estimation", 2018 IEEE/CVF CONFERENCE ON COMPUTER VISION AND PATTERN RECOGNITION, IEEE, 18. Juni 2018 (2018-06-18), Seiten 6393-6401, XP033473556, DOI: 10.1109/CVPR.2018.00669 [gefunden am 2018-12-14]**

**Beschreibung**

Die Erfindung betrifft eine Kamera und ein Verfahren zur Erfassung von durch einen Erfassungsbereich bewegten Objekten nach dem Oberbegriff von Anspruch 1 beziehungsweise 14.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Kamera ist vielfach Teil eines komplexen Sensorsystems. Beispielsweise ist es bei Lesetunneln an Förderbändern üblich, eine Vielzahl von kamerabasierten Codelesern einerseits nebeneinander zur Abdeckung einer größeren Förderbandbreite und andererseits aus unterschiedlichen Perspektiven zu montieren, um Objekte von mehreren Seiten aufzunehmen. Weiterhin wird oftmals die Geometrie der geförderten Objekte vorab mit einem gesonderten Laserscanner vermessen, um daraus Fokusinformationen, Auslösezeitpunkte, Bildbereiche mit Objekten und dergleichen zu bestimmen.

In dem Objektiv der Kamera ist üblicherweise eine Blende verbaut. Die Apertur bleibt jedoch herkömmlich in den beschriebenen Anwendungen konstant. Lediglich einmalig, beispielsweise während des Installationsprozesses, findet möglicherweise eine Anpassung der Apertur statt, um eine passende konstante Apertur für den Betrieb zu finden.

Verstellbare Blenden sind an sich seit langem im Bereich der Fotografie im Einsatz. Es gibt inzwischen vielfältige technische Umsetzungen für variable Blenden. Eine klassische Irisblende kann motorisch aktuiert werden. Ein LCD-Display mit diskreten Pixeln, die sich von opak auf transparent schalten lassen, ermöglicht eine Blendenwirkung mit verschiedenen Öffnungsradien. Alternativ zu einem LCD-Display ist der Einsatz von Microfluiden denkbar, wobei eine opake Flüssigkeit über Elektrobenetzung (electrowetting) aktuiert wird, um so in verschiedenen diskreten Radien auf einer transparenten Scheibe ringförmig positioniert zu werden. Eine weitere Umsetzungsmöglichkeit basiert auf einer transparenten Membran, die sich durch Unterdruck einwölbt und eine opake Flüssigkeit verdrängt. An der Kontaktfläche von Membran und einem Glassubstrat entsteht dadurch eine runde transparente Öffnung.

In der DE 10 2018 105 301 A1 wird ein Abstandssensor in eine Kamera integriert, der auf einem Lichtlaufzeitverfahren basiert (TOF, Time of Flight). Damit wird ein Höhenprofil gemessen, und anhand dessen werden verschiedene Funktionen umgesetzt. Eine dieser Funktionen ist die Einstellung der Fokuslage einer Empfangsoptik. Eine Blende im Empfangsobjektiv wird nur einmalig erwähnt, und diese Blende ist nicht verstellbar.

In der DE 10 2020 109 928 B3 wird die Messdauer eines solchen Abstandssensors angepasst, damit der Abstandswert höchstens mit einem Messfehler gemessen wird, bei dem die entsprechend gewählte Fokuslage für eine geforderte Bildschärfe ausreicht. Die DE 10 2020 109 929 B3 verstellt bei zu knapper verfügbarer Fokussierzeit nur bis in eine rechtzeitig erreichbare Fokuslage noch ausreichender Bildschärfe, die von der optimalen Fokuslage entsprechend der Abstandsmessung abweicht. Der Einfluss der Blende auf den Tiefenschärfenbereich soll dabei jeweils durch Fixierung oder optimale Einstellung ausdrücklich ausgeschlossen werden.

Die US 7 025 271 B2 beschreibt einen kamerabasierten Codeleser mit wählbarem Tiefenschärfenbereich, der vorzugsweise als Handgerät ausgebildet ist. Ein optisches Element wird zwischen einem transmissiven und einem reflektiven Zustand umgeschaltet, um so das Empfangslicht auf eine erste oder zweite Linsenanordnung zu führen, wobei die Linsenanordnungen untereinander unterschiedliche Tiefenschärfenbereiche aufweisen. Einleitend ist eine einstellbare Blendenanordnung erwähnt, und es wird bemerkt, dass mit kleinerem Blendendurchmesser der Tiefenschärfenbereich größer wird und umgekehrt. Das wird dann aber nicht näher ausgeführt.

Die US 2010/0310246 A1 befasst sich mit der Blendenwahl in der Fotografie. Die Blende wird wahlweise manuell oder automatisch eingestellt, um eine Über- oder Unterbelichtung zu vermeiden. Die US 2012/0229674 A1 greift auf eine Datenbank zu, um einen Algorithmus zur Optimierung des Tiefenschärfenbereichs durchzuführen. Dabei kann der Tiefenschärfenbereich durch Veränderung der Blende modifiziert werden.

Die US 2017/0310867 A1 offenbart ein Steuerungsverfahren für eine Blende einer optischen Vorrichtung. Die Blende wird mittels eines Antriebs und elektronischer Steuerung entsprechend einer Fokusposition eingestellt.

In der JP 2011 151 448 A wird eine Bildgebungsvorrichtung mit einer variablen Blende beschrieben. Die Blendenöffnung wird verstellt, um den Tiefenschärfenbereich zu beeinflussen.

Aus der US 9 936 119 B2 ist eine Fixfokuskamera mit festgelegtem Tiefenschärfenbereich bekannt, der mittels Blende erweitert wird.

Die Arbeit von Srinivasan, Pratul P., et al., "Aperture supervision for monocular depth estimation", Proceedings of the IEEE Conference on Computer Vision and Pattern Recognition, 2018 befasst sich mit einem Training eines Verfahrens des maschinellen Lernens, das Tiefenschätzungen aus Einzelbildern leisten soll. Für das Training werden Bilder verwendet, die aus derselben Perspektive, jedoch bei unterschiedlichen Blendeneinstellungen aufgenommen sind.

Es ist daher Aufgabe der Erfindung, die Aufnahme von Bildern weiter zu verbessern.

Diese Aufgabe wird durch eine Kamera und ein Verfahren zur Erfassung von durch einen Erfassungsbereich bewegten Objekten nach Anspruch 1 beziehungsweise 14 gelöst. Kamera und Objekte befinden sich in Relativbewegung zueinander, dadurch bewegen sich die aufzunehmenden Objekte in den beziehungsweise durch den Erfassungsbereich der Kamera. Ein Bildsensor nimmt Bilder beziehungsweise Bilddaten des Erfassungsbereichs und somit eines dort befindlichen Objekts auf. Eine Empfangsoptik der Kamera bezeichnet ein Empfangsobjektiv, das je nach Qualitätsanforderungen eine oder mehrere Linsen und sonstige optische Elemente sowie eine verstellbare Blende aufweist, deren Blendenöffnung oder Apertur durch Ansteuerung veränderbar ist. Der Tiefenschärfenbereich resultiert aus Eigenschaften der Empfangsoptik und der jeweiligen Einstellung der Blende. Eine Steuer- und Auswertungseinheit liest die Bilddaten aus, um sie beispielsweise vorzuverarbeiten, auszuwerten, zu speichern oder an einer Schnittstelle auszugeben. Sie ist weiterhin für die Ansteuerung der Blende und damit deren geeignete Einstellungen zuständig. Die Steuer- und Auswertungseinheit kann einen gemeinsamen Baustein oder jeweils eigene Bausteine aufweisen, die sich um die Blendeneinstellung einerseits und die sonstigen Aufgaben in der Kamera wie Verarbeitung der Bilddaten andererseits kümmern.

Die Erfindung geht von dem Grundgedanken aus, die Blendeneinstellung von Objekt zu Objekt dynamisch anzupassen. Für jedes Objekt ist durch eine passende Blende sichergestellt, dass es innerhalb eines Tiefenschärfenbereichs aufgenommen ist und somit das aufgenommene Bild beziehungsweise die Bilddaten eine geforderte Bildschärfe erreichen.

Die Erfindung hat den Vorteil, dass durch individuelle Anpassung der Blende je Objekt die Qualität der Bilddaten erhöht wird. Das ermöglicht eine einfachere Ausgestaltung der Empfangsoptik an anderer Stelle, beispielsweise ein Fixfokussystem, oder es wird alternativ besonders hohen Ansprüchen an die Bilddaten gerecht. Eine einstellbare Blende ist als Bauteil verfügbar und die Erfindung daher einfach und vergleichsweise kostengünstig umsetzbar.

Der Tiefenschärfenbereich ist bevorzugt aus anwendungsspezifischen Anforderungen bestimmt. Der Begriff Tiefenschärfenbereich wird damit ausdrücklich in einem weiteren Verständnis verwendet als nur in seinem ursprünglichen optischen oder physikalischen Sinne. Der physikalische Tiefenschärfenbereich hängt von Objektivkonstanten und -einstellungen der Empfangsoptik ab. In der Praxis kommt es aber nicht primär auf objektive Bildschärfekriterien an, sondern auf die Frage, ob die Bilddaten die angestrebte Auswertung zulassen werden. Das kann von Anwendung zu Anwendung sehr unterschiedlich zu beurteilen sein. Die Blendeneinstellung soll vorzugsweise dafür sorgen, dass das Objekt in einem Tiefenschärfenbereich nach diesem anwendungsbezogenen Verständnis aufgenommen wird.

Die Steuer- und Auswertungseinheit ist bevorzugt dafür ausgebildet, mit Hilfe der Bilddaten einen Codeinhalt eines Codes auf dem Objekt zu lesen. Die Kamera wird so zu einem kamerabasierten Codeleser für Barcodes und/oder 2D-Codes nach diversen Standards, gegebenenfalls auch für eine Texterkennung (OCR, Optical Character Reading). Bevor ein Code gelesen wird, erfolgt noch bevorzugter eine Segmentierung, mit der interessierende Bereiche (ROI, Region of Interest) als Codekandidaten identifiziert werden.

Das Objekt ist bevorzugt dann im Tiefenschärfenbereich aufgenommen, wenn aus den aufgenommenen Bilddaten ein Code gelesen werden kann. Das ist ein Beispiel der oben angesprochenen anwendungsspezifischen Anforderungen an den Tiefenschärfenbereich. Das Bild soll so scharf aufgenommen sein, dass ein Code gelesen werden kann. Das ist ein rein praxisbezogenes Kriterium, bei dem es nicht auf abstrakte Qualitäts- oder Bildschärfemaße der Bilddaten ankommt, sondern rein pragmatisch auf die Frage, ob die Aufgabe des Codelesens erfüllbar ist. So wird durch dynamische Anpassung der Blende eine maximale Dekodier- oder Leserate erreicht. Die Erwartungshaltung, wann die Bildschärfe ausreicht, um einen Code zu lesen, kann vorab simuliert oder experimentell erzeugt werden. Dazu werden beispielsweise der Kamera Codes unter typischen Bedingungen beispielsweise hinsichtlich Umgebungslicht und Druckqualität in verschiedenen Abständen präsentiert, um herauszufinden, bei welchen Blendeneinstellungen ein Code noch gelesen wird (GoodRead) beziehungsweise nicht mehr gelesen wird (No-Read).

Der erforderliche Tiefenschärfenbereich hängt bevorzugt von einer Codeart, einer Modulgröße, beispielsweise angegeben in Pixel je Modul, und/oder einem Decodierverfahren ab. Wiederum geht es hier nicht allein um den physikalischen Tiefenschärfenbereich, sondern um praktische Anforderungen und damit das weitere Verständnis eines anwendungsspezifischen Tiefenschärfenbereichs. Ob ein Code gelesen werden kann, bestimmt sich insbesondere abhängig von den genannten Parametern oder Einstellungen. Manche Codearten sind einfacher und damit auch noch aus vergleichsweise minderwertigen Bilddaten lesbar, umgekehrt sind manche Codearten besonders anspruchsvoll. Wenn je Modul mehr Pixel zur Verfügung stehen, ist das Codelesen einfacher als bei kleiner Modulgröße. Die Belichtung, sowohl im Sinne von Integrationszeit als auch von Beleuchtungsszenario einer optionalen aktiven Beleuchtung, spielt ihre Rolle. Einige Decoder kommen mit geringerer Bildqualität besser zurecht als andere. Dabei kann es Wechselwirkungen zwischen den genannten Parametern geben, die sich auf den erforderlichen Tiefenschärfenbereich auswirken.

Die Kamera weist einen Abstandssensor zum Messen eines Abstandswerts zu einem Objekt auf. Der Abstandswert dient als Kriterium für einen benötigten Tiefenschärfenbereich, und die Steuer- und Auswertungseinheit kann die Blende entsprechend einstellen. In einer bevorzugten statischen Montage der Kamera über einer Referenzebene, beispielsweise einem Förderband, lässt sich der Abstandswert in Kenntnis der Montageposition in eine Höhe des Objekts über dieser Referenzebene umrechnen. Daher werden im Folgenden Objekthöhe und Abstand an einigen Stellen austauschbar verwendet.

Der Abstandssensor ist bevorzugt in die Kamera integriert. Dadurch bleibt das System kompakt und gekapselt. Die Steuer- und Auswertungseinheit hat einen einfachen internen Zugriff auf den Abstandssensor. Der Abstandssensor ist bevorzugt als optoelektronischer Abstandssensor insbesondere nach dem Prinzip des Lichtlaufzeitverfahrens ausgebildet. Derartige Abstandssensoren sind als fertige Chips beziehungsweise Module erhältlich. Besonders bevorzugt weist der Abstandssensor eine Vielzahl von SPADs auf (Single-Photon Avalanche Photodiode), die jeweils über TDCs (Time-to-Digital Converter) eine Einzellichtlaufzeit messen.

Die Steuer- und Auswertungseinheit ist dafür ausgebildet, die Blende für ein Objekt in Abhängigkeit eines für das Objekt gemessenen Abstandswertes einzustellen. Die dynamische Kopplung der Einstellung der Blende an den Abstandswert der einzelnen Objekte sorgt dafür, dass das jeweilige Objekt innerhalb eines geforderten Tiefenschärfenbereichs aufgenommen wird, wobei Tiefenschärfenbereich vorzugsweise im mehrfach diskutierten anwendungsspezifischen Sinne zu verstehen ist.

Die Steuer- und Auswertungseinheit stellt bevorzugt die Blende für ein Objekt anhand einer Funktion der erforderlichen Blende in Abhängigkeit von dem Abstand eines Objekts ein. Somit ist eine Funktion Blende(Abstand) beziehungsweise Blende(Objekthöhe) hinterlegt, beispielsweise in einem Speicher der Kamera oder der Steuer- und Auswertungseinheit. Diese Funktion kann als analytische Funktion oder als Näherung, beispielsweise als Stufenfunktion, als insgesamt oder stückweise lineare oder polynomiale Funktion oder als eine Nachschlagtabelle (LUT, Lookup Table) vorgegeben sein.

Die Steuer- und Auswertungseinheit ist bevorzugt für ein Einlernverfahren ausgebildet, bei dem ein Objekt in einem Abstand angeordnet, Bilddaten aufgenommen, eine Bildschärfe geprüft und die Blende verstellt wird, bis eine passende Blendeneinstellung für diesen Abstand gefunden ist. Damit kann für einen bestimmten Abstand die passende Blende kalibriert oder eingelernt werden, die dann im Betrieb für ein Objekt in diesem Abstand dynamisch eingestellt werden sollte. Das Kriterium für die jeweils passende Blende ist beispielsweise eine maximale, optimale oder noch ausreichende Bildschärfe oder eine anwendungsspezifische Anforderung, wie beispielsweise, dass ein Code gelesen wird. Für ein robusteres Ergebnis kann das Einlernen für mindestens ein weiteres Objekt im gleichen Abstand wiederholt und dann beispielsweise gemittelt werden. Weitere Wiederholungen platzieren ein Objekt oder nacheinander mehrere Objekte in unterschiedlichen Abständen, um dafür die passende Blendeneinstellung aufzufinden, oder in einer bevorzugten Ausführungsform mehrere Werte der Funktion Blende(Abstand). Statt der so resultierenden Stufenfunktion kann eine Interpolation verwendet werden.

Die Empfangsoptik weist eine feste Fokuslage auf. Die Kamera bildet damit ein Fixfokussystem. Vorzugsweise ist die feste Fokuslage auf ferne Objekte eingestellt, d.h. Objekte mit geringer Höhe in einem maximalen Objektabstand beispielsweise in einer Ebene eines Förderbandes. Codes auf diesen Objekten werden daher mit einer kleinen Modulgröße aufgenommen. Daher ist es sinnvoll, die Fokuslage für diese besonders anspruchsvolle Decodieraufgabe zu wählen.

Die Steuer- und Auswertungseinheit ist bevorzugt dafür ausgebildet, für ein Objekt in einem der Fokuslage entsprechenden Abstand die Blende auf eine maximale Blendenöffnung einzustellen und für abweichende, insbesondere kleinere Abstände die Blende zunehmend zu schließen. Befindet sich ein Objekt in einem der Fokuslage entsprechenden Abstand, so ist kein Beitrag der Blende zu einem erweiterten Tiefenschärfenbereich erforderlich. Die maximale Öffnung der Blende kann noch durch andere Randbedingungen wie Überbelichtungen beschränkt werden. In abweichenden Abständen kann der Tiefenschärfenbereich durch Zuziehen der Blende erweitert werden. Dieses Verhalten kann durch die Funktion Blende(Abstand) abgebildet werden. Die Fokuslage ist in einem Fixfokussystem vorzugsweise auf einen maximalen Abstand eingestellt. Für ein weit entferntes Objekt ist dann die Blende offen, der Tiefenschärfenbereich klein, und es werden Bilder mit viel Licht bei guter Auflösung aufgenommen. Bei mehreren Objekten wird die Blende verkleinert und der Tiefenschärfenbereich erweitert sich. Der verringerte Lichteinfall ist wegen des abstandsabhängigen Dynamikverhaltens, d.h. der typischen $1/r^2$-Charakteristik, in der Regel sogar erwünscht. Die schlechtere Auflösung ist hinnehmbar, da sich die Strukturen und insbesondere Modulgrößen mit zunehmender Nähe vergrößern.

Die Steuer- und Auswertungseinheit ist bevorzugt dafür ausgebildet, die Blende in Abhängigkeit von einer Helligkeit insbesondere der Bilddaten einzustellen. Hier wird eine Remissionsmessung anstelle einer Abstandsmessung zur Grundlage der Blendeneinstellung. Bei sonst gleichen Bedingungen wird ein nahes Objekt heller erscheinen als ein fernes Objekt. Die Remissionsmessung erfolgt durch einen zusätzlichen Lichtempfänger, beispielsweise eine Photodiode oder dergleichen, oder es wird dafür die Helligkeit der Bilddaten bewertet. Abstands- und Remissionsmessung sind auch kombinierbar.

Die Blende ist bevorzugt in der Empfangsoptik verbaut oder auf die Empfangsoptik aufgesetzt. Insbesondere kann die einstellbare Blende in einem Objektivdesign die bisherige Festblende ersetzen. Es ist denkbar, eine Blende gemeinsam mit einer Linse integriert auszubilden. Alternativ wird die verstellbare Blende vorne zur Szenerie oder hinten zum Bildsensor hin auf das Objektiv aufgesetzt.

Die Kamera ist vorzugsweise stationär an einer Fördereinrichtung montiert, die zu erfassende Objekte in einer Förderrichtung durch den Erfassungsbereich führt. Dies ist eine sehr häufige industrielle Anwendung einer Kamera. Durch die ständig wechselnden Objekte und die strenge Vorgabe der Objektwechsel durch die Fördereinrichtung muss die Einstellung der Blende praktisch ständig und unter engen Zeitvorgaben reagieren können.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Schnittdarstellung einer Kamera;

Fig. 2    eine dreidimensionale Ansicht einer beispielhaften Anwendung der Kamera in Montage an einem Förderband; und

Fig. 3    eine Darstellung einer Kamera und zweier aufeinanderfolgender Objekte, die in deren Erfassungsbereich bewegt werden, zur Erläuterung der geometrischen Verhältnisse und des Zeitverhaltens an einem Förderband.

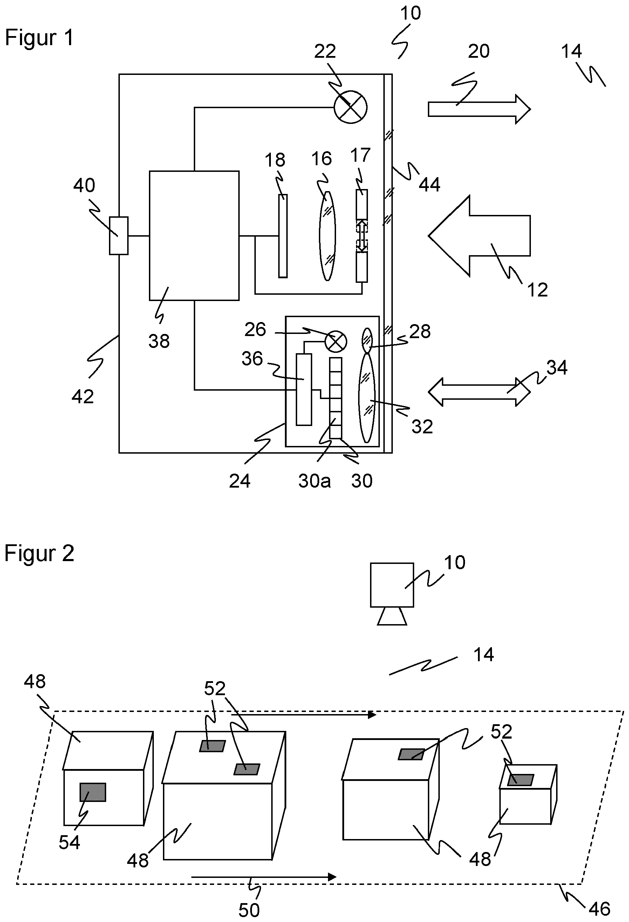

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Die Empfangsoptik 16 hat eine feste Fokuslage (Fixfokus).

Der Empfangsoptik ist eine verstellbare Blende 17 zugeordnet. Das Verstellprinzip kann auf verschiedensten Technologien basieren, insbesondere einer motorisch aktuierten Irisblende, einem LCD-Display, einer opaken Flüssigkeit unter Ausnutzung des Elektrobenetzungseffekts oder einer transparenten Membran wie einleitend kurz diskutiert. Im Folgenden wird nur der funktionale Aspekt betrachtet, dass die Blendenöffnung der verstellbaren Blende 17 durch elektronische Ansteuerung veränderbar ist. Die verstellbare Blende kann in der Empfangsoptik 16 verbaut oder zu dem Bildsensor 18 oder zu dem Erfassungsbereich 14 hin aufgesetzt sein. Vorzugsweise erzeugt die verstellbare Blende 17 eine runde Blendenöffnung, es sind aber auch andere Geometrien denkbar.

Um den Erfassungsbereich 14 während einer Aufnahme der Kamera 10 mit Sendelicht 20 auszuleuchten, umfasst die Kamera 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen. Die Beleuchtungseinheit 22 kann abweichend von der Darstellung ein externes Bauteil oder ganz weggelassen sein, im letzteren Fall arbeitet die Kamera 10 nur mit dem Umgebungslicht.

Zusätzlich zu dem eigentlichen Bildsensor 18 zur Erfassung von Bilddaten weist die Kamera 10 einen optoelektronischen Abstandssensor 24 auf, der mit einem Lichtlaufzeitverfahren (TOF, Time of Flight) Abstände zu Objekten in dem Erfassungsbereich 14 misst. Der Abstandssensor 24 umfasst einen TOF-Lichtsender 26 mit TOF-Sendeoptik 28 sowie einen TOF-Lichtempfänger 30 mit TOF-Empfangsoptik 32. Damit wird ein TOF-Lichtsignal 34 ausgesandt und wieder empfangen. Eine Lichtlaufzeitmesseinheit 36 bestimmt die Laufzeit des TOF-Lichtsignals 34 und daraus den Abstand zu einem Objekt, an dem das TOF-Lichtsignal 34 zurückgeworfen wurde.

Der TOF-Lichtempfänger 30 weist in der dargestellten Ausführungsform mehrere Lichtempfangselemente 30a oder Pixel auf und kann so sogar ein ortsaufgelöstes Höhenprofil erfassen. Alternativ weist der TOF-Lichtempfänger 30 nur ein Lichtempfangselement 30a auf beziehungsweise verrechnet mehrere Messwerte der Lichtempfangselemente 30a zu einem Abstandswert. Der Aufbau des Abstandssensors 24 ist rein beispielhaft, und auch andere optoelektronische Abstandsmessungen ohne Lichtlaufzeitverfahren sowie nicht-optische Abstandsmessungen sind vorstellbar. Die optoelektronische Entfernungsmessung mittels Lichtlaufzeitverfahren ist bekannt und wird daher nicht im Einzelnen erläutert.

Zwei beispielhafte Messverfahren sind Photomischdetektion mit einem periodisch modulierten TOF-Lichtsignal 34 und Pulslaufzeitmessung mit einem pulsmodulierten TOF-Lichtsignal 34. Dabei gibt es auch hochintegrierte Lösungen, in denen der TOF-Lichtempfänger 30 mit der Lichtlaufzeitmesseinheit 36 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 30, der als Matrix von SPAD-Lichtempfangselementen 30a aufgebaut ist (Single-Photon Avalanche Diode). Für eine solche SPAD-basierte Abstandsmessung sind mehrere Lichtempfangselemente 30a besonders vorteilhaft, die nicht für eine ortsaufgelöste Messung, sondern eine statistische Mehrfachmessung genutzt werden, mit der ein genauerer Abstandswert bestimmt wird. Die TOF-Optiken 28, 32 sind nur symbolhaft als jeweilige Einzellinsen stellvertretend für beliebige Optiken wie beispielsweise ein Mikrolinsenfeld gezeigt.

Eine Steuer- und Auswertungseinheit 38 ist mit der verstellbaren Blende 17, der Beleuchtungseinheit 22, dem Bildsensor 18 und dem Abstandssensor 24 verbunden und für die Steuerungs-, Auswertungs- und sonstigen Koordinierungsaufgaben in der Kamera 10 zuständig. Sie steuert also die verstellbare Blende 17 an, vorzugsweise in Abhängigkeit von einem Abstandswert des Abstandssensors 24, so dass für das jeweilige zu erfassende Objekt eine noch zu erläuternde passende Blendenöffnung entsteht, und liest Bilddaten des Bildsensors 18 aus, um sie zu speichern beziehungsweise an einer Schnittstelle 40 auszugeben. Vorzugsweise ist die Steuer- und Auswertungseinheit 38 in der Lage, Codebereiche in den Bilddaten aufzufinden und zu decodieren, womit die Kamera 10 zu einem kamerabasierten Codeleser wird. Für die verschiedenen Steuer- und Auswertungsaufgaben können mehrere Bausteine vorgesehen sein, beispielsweise um die Blendenanpassungen in einem separaten Baustein oder Vorverarbeitungen der Bilddaten auf einem separaten FPGA durchzuführen.

Die Kamera 10 wird durch ein Gehäuse 42 geschützt, das im vorderen Bereich, wo das Empfangslicht 12 einfällt, durch eine Frontscheibe 44 abgeschlossen ist.

Figur 2 zeigt eine mögliche Anwendung der Kamera 10 in Montage an einem Förderband 46. Die Kamera 10 wird hier nur noch als Symbol und nicht mehr mit ihrem bereits anhand der Figur 1 erläuterten Aufbau gezeigt. Das Förderband 46 fördert Objekte 48, wie durch den Pfeil 50 angedeutet, durch den Erfassungsbereich 14 der Kamera 10. Die Objekte 48 können an ihren Außenflächen Codebereiche 52 tragen. Aufgabe der Kamera 10 ist, Eigenschaften der Objekte 48 zu erfassen und in einem bevorzugten Einsatz als Codeleser die Codebereiche 52 zu erkennen, die dort angebrachten Codes auszulesen, zu dekodieren und dem jeweils zugehörigen Objekt 48 zuzuordnen. Um auch Objektseiten und insbesondere seitlich angebrachte Codebereiche 54 zu erfassen, werden vorzugsweise zusätzliche, nicht dargestellte Kameras 10 aus unterschiedlicher Perspektive eingesetzt. Außerdem können mehrere Kameras 10 nebeneinander angeordnet werden, um gemeinsam einen breiteren Erfassungsbereich 14 abzudecken.

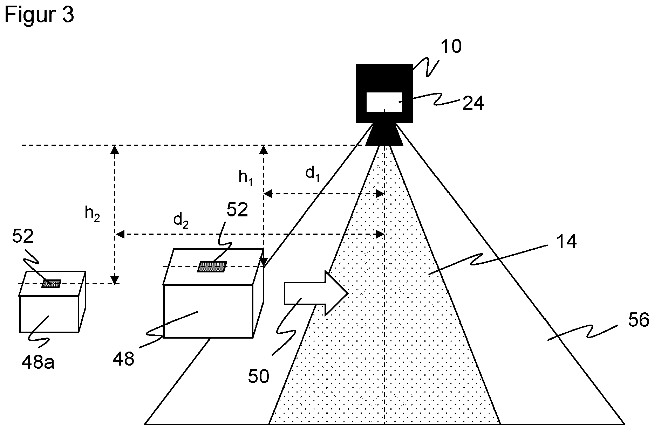

Figur 3 zeigt nochmals eine Kamera 10 mit nach unten gerichtetem Erfassungsbereich 14, wie in der Situation der Figur 2. Ein Abstandsmesssichtfeld 56 des Abstandssensors 24 ist in diesem Beispiel größer als der Erfassungsbereich 14 und schließt diesen ein. Es sind aber auch abweichende überlappende und nicht überlappende Konfigurationen von Erfassungsbereich 14 und Abstandsmesssichtfeld 56 vorstellbar. Ein zumindest teilweise vorgelagertes Abstandsmesssichtfeld 56 hat den Vorteil, dass frühzeitiger ein Abstandsmesswert zur Verfügung steht.

Ein erstes aufzunehmendes Objekt 48 bewegt sich mit einer Geschwindigkeit v in den Erfassungsbereich 14. Die Geschwindigkeit v kann als Parameter einer Fördereinrichtung bekannt, durch einen externen Sensor wie einen Encoder gemessen, aus früheren Bildaufnahmen rekonstruiert oder durch den Abstandssensor 24 bestimmt sein. Im letzteren Fall weist der Abstandssensor 24 vorzugsweise mehrere Empfangszonen aus Lichtempfangselementen 30a auf, in die das Objekt 48 nacheinander eintritt, so dass aus der zeitlichen Abfolge und den gemessenen Abständen auf die Geschwindigkeit v geschlossen werden kann.

Das Objekt 48 wird bei Eintritt in das Abstandsmesssichtfeld 56 detektiert. Die Aufnahme soll vorzugsweise ausgelöst werden, wenn es sich in der Mitte des Erfassungsbereichs 14 befindet. Dazu muss noch der Weg $d_1$ zurückgelegt werden, und die Zeit bis dahin ist durch $t_1 = d_1/v$ gegeben. Der Weg $d_1$ hängt noch von dem Abstand $h_1$ ab, da unterschiedlich hohe Objekte 48 in unterschiedlichen Positionen erstmals erfasst werden. Der Abstand $h_1$ wiederum wird von dem Abstandssensor 24 gemessen und muss selbst noch aus dem schräg statt senkrecht gemessenen Abstandswert $h_{m1}$ mittels $h_1 = h_{m1} \cos \alpha$ umgerechnet werden. Dabei entspricht der Winkel $\alpha$ in der dargestellten Konfiguration unter der Annahme, dass $h_{m1}$ sofort bei Eintritt in das Abstandsmesssichtfeld 56 gemessen wird, dem halben Sichtwinkel des Abstandssensors 24 und ist jedenfalls aus der festen Konfiguration bekannt. Mit diesen Größen kann nun auch $d_1 = h_1 \tan \alpha$ berechnet werden.

Vergleichbare Überlegungen können für die weiteren Objekte angestellt werden, wobei stellvertretend nur ein weiteres Objekt 48a einer Höhe $h_2$ mit einem noch zurückzulegenden Weg $d_2$ gezeigt ist. Die Steuer- und Auswertungseinheit 38 verfügt somit über die aus Figur 3 entnehmbaren relevanten geometrischen Informationen und Auslösezeitpunkte. Damit kann die Blendenöffnung der verstellbaren Blende 17 rechtzeitig für die Aufnahme eines jeden Objekts 48, 48a entsprechend dem jeweiligen Abstandswert des Abstandssensors 24 oder der daraus berechenbaren Höhe $h_1$, $h_2$ eingestellt werden.

Ein Objekt 48a, das weiter von der Kamera 10 entfernt ist und somit eine geringere Höhe $h_1 < h_2$ hat, wird wegen der mit dem Abstand quadratisch abfallenden Amplitude des Signals dunkler wahrgenommen. Zusätzlich erscheint der Code 52 auf einem Objekt 48a mit niedrigerer Höhe $h_2$ kleiner, so dass eine bessere Auflösung von Nöten ist. Eine geschlossene Blende erweitert den Tiefenschärfenbereich und verringert die Auflösung. Welche Verringerung und welches Signal-Rausch-Verhältnis noch vertragen wird, hängt von der konkreten Anwendung ab. Das wird an dem Beispiel des Codelesens deutlich: Es kommt letztlich nicht darauf an, ob Bilder physikalische Qualitätskriterien erfüllen, sondern ob der Code gelesen werden kann. Die passende Blendeneinstellung für einen Abstandswert bemisst sich folglich vorzugsweise daran, ob damit gewährleistet ist, dass ein Code lesbar sein wird. Dies kann je nach Codeart, Modulgröße, Belichtung und eingesetztem Decoder variieren, so dass es sinnvoll sein kann, in Abhängigkeit dieser Parameter mehrere Blendeneinstellungen für jeweilige Abstandswerte zu kennen und im Betrieb je nach Situation zu verwenden.

Eine Grundlage für die Einstellung der Blende lässt sich wie folgt angeben. Die Auflösung $Res_{img}$ hängt mit der Pixelgröße $p$ und der Vergrößerung $mag$ wie folgt zusammen:

$$Res_{img} = p/mag.$$

Ferner kann die Vergrößerung $mag$ bei bekannter Brennweite $f$ und für Abstände $r > f$ genähert werden zu

$$mag = f/(f - r).$$

Wenn die Blende zu stark geschlossen wird, treten womöglich Beugungseffekte auf, die Einfluss auf die Auflösung nehmen können. Solche Beugungseffekte werden mit dem Rayleigh-Kriterium beschrieben:

$$Res_{diff} = 1.22 * lambda /(N * mag).$$

Lambda ist hier die Wellenlänge, bei polychromatischen LEDs kann beispielsweise der Mittelwert benutzt werden. N ist die Blendenzahl und damit invers proportional zu dem Durchmesser der Blende. Der Faktor 1.22 entspricht einer Nullstellenlage der Bessel-Funktion und kann alternativ anders gewählt werden.

Die Auflösungsgrenze ist dann gegeben durch das Maximum der beiden Werte $Res_{img}$, $Res_{diff}$:

$$Res = \max (Res_{img}, Res_{diff}).$$

Der Tiefenschärfenbereich $DOF$ ist approximiert durch:

$$DOF = alpha * \frac{2r^2 * N * C}{f^2}.$$

Darin ist $alpha$ ein empirischer Korrekturfaktor, und $C$ ist der sogenannte "circle of confusion", der mit der Auflösungsgrenze zusammenhängt und anschaulich die kleinste Einheit darstellt, die noch aufgelöst werden soll. Je kleiner das zu untersuchende Objekt, desto kleiner wird wegen der linearen Abhängigkeit der Tiefenschärfenbereich $DOF.$ Nun kann $C$ durch die gewünschte Auflösungsgrenze ersetzt werden, noch korrigiert durch einen empirisch ermittelten Faktor a. Sofern die die Blende nicht zu klein und daher die Auflösung nicht durch Beugung begrenzt ist, führt die Ersetzung von $C$ durch $Res$ nach den obigen Gleichungen zu:

$$DOF(r) = alpha * \frac{2r^2 * N * a * p * (f - r)}{f^3} \cong alpha * \frac{2r^3 * N * a * p}{f^3}.$$

Daher ergibt sich folgendes Optimum für die Blendeneinstellung: Ist das Objekt klein, so sollte die Blende geöffnet werden. Damit wird der Tiefenschärfenbereich $DOF$ klein. Daher sollte eine statische Fokuslage der Empfangsoptik 16 für große Abstände beziehungsweise kleine Objekte ausgelegt werden, so dass in einer Codeleseanwendung die kleine Modulgröße gelesen werden kann. Bei geringeren Abständen beziehungsweise größeren Objekten und gleichbleibender Fokusposition wird die Blende zugezogen, und zwar so weit, bis der Tiefenschärfenbereich $DOF$ ausreichend ist, um den Code lesen zu können. Dank des geringeren Abstandswerts wird die Modulgröße in Pixeln größer, so dass die weiter geschlossene Blende vertragen wird.

Diese Blendenanpassung ist auch von Vorteil, weil sie die Helligkeitsdynamik teilweise kompensiert. Die Anzahl der Photonen, die die Kamera 10 erreichen, hängt von dem Durchmesser *d* der Blende ab:

$$signal \sim 1/d^2.$$

Das korrespondiert gerade mit dem quadratischen Abfall der Amplitude mit dem Abstand:

$$signal \sim 1/r^2.$$

Wegen *N* = *f*/(*d*/2) wächst zugleich der Tiefenschärfenbereich *DOF* linear mit kleiner werdender Blende.

Mit diesen Erkenntnissen kann eine Funktion Blende(Abstand) gefunden werden, mit der die Steuer- und Auswertungseinheit 38 für den jeweils gemessenen Abstandswert die passende Einstellung für die verstellbare Blende 17 auffindet. Mit dieser dynamischen Blendeneinstellung pro Objekt ist die Abbildung aufgrund des erforderlichenfalls durch die Blende erweiterten Tiefenschärfenbereichs scharf und liefert genügend Signal, damit der Decoder den Code lesen kann (Good Read). Unter Umständen ist es sinnvoll, mehrere solche Funktionen für unterschiedliche Szenarien hinsichtlich Codeart, Modulgröße, Belichtung und/oder Decoder zu hinterlegen und in Abhängigkeit der tatsächlichen Bedingungen in der Anwendung eine dieser Funktionen zu verwenden.

Zum Einlernen oder Kalibrieren der erforderlichen Blendeneinstellungen oder der Funktion Blende(Abstand) lässt sich zunächst ein Startpunkt auffinden, indem ein niedrigstes zu erwartendes Objekt mit entsprechend kleinster Modulgröße in dem Erfassungsbereich 14 positioniert wird. Das entspricht bei einem Fixfokussystem vorzugsweise dessen Fokuslage. Die Blende wird so weit geöffnet, dass der Code noch gelesen wird, und das entspricht dem einzustellenden Wert für die Blende bei diesem Abstand. Für höhere Objekte wird die Blende zur Kompensation der Unschärfe weiter geschlossen. Es ist denkbar, hier mindestens einen weiteren Wert der Funktion Blende(Abstand) mit Hilfe eines Objekts der entsprechenden Höhe zu kalibrieren. Aus den eingelernten Blendeneinstellungen kann für andere Abstandswerte beziehungsweise Höhen inter- beziehungsweise extrapoliert werden.

**Patentansprüche**

1. Kamera (10) zur Erfassung von durch einen Erfassungsbereich (14) bewegten Objekten (48), die einen Bildsensor (18) zur Aufnahme von Bilddaten, eine Empfangsoptik (16) mit einer verstellbaren Blende (17) sowie eine Steuer- und Auswertungseinheit (38) zum Auslesen der Bilddaten und zum Einstellen der Blende (17) aufweist,
**dadurch gekennzeichnet,**
**dass** die Empfangsoptik (16) eine feste Fokuslage aufweist, dass die Kamera (10) einen Abstandssensor (24) zum Messen eines Abstandswerts zu einem Objekt (48) aufweist und dass die Steuer- und Auswertungseinheit (38) dafür ausgebildet ist, die Blende (17) je Objekt (48) in Abhängigkeit eines für das Objekt (48) gemessenen Abstandswertes so einzustellen, dass das Objekt (48) in einem Tiefenschärfenbereich aufgenommen wird, in dem die aufgenommenen Bilddaten eine geforderte Bildschärfe erreichen.

2. Kamera (10) nach Anspruch 1,
wobei der Tiefenschärfenbereich aus anwendungsspezifischen Anforderungen bestimmt ist.

3. Kamera (10) nach Anspruch 1 oder 2,
wobei die Steuer- und Auswertungseinheit (38) dafür ausgebildet ist, mit Hilfe der Bilddaten einen Codeinhalt eines Codes (52) auf dem Objekt (48) zu lesen.

4. Kamera (10) nach Anspruch 3,
wobei das Objekt (48) dann im Tiefenschärfenbereich aufgenommen ist, wenn aus den aufgenommenen Bilddaten ein Code gelesen werden kann.

5. Kamera (10) nach Anspruch 3 oder 4,
wobei der erforderliche Tiefenschärfenbereich von einer Codeart, einer Modulgröße, einer Belichtung und/oder einem Decodierverfahren abhängt.

6. Kamera (10) nach einem der vorhergehenden Ansprüche,
wobei der Abstandssensor (24) in die Kamera (10) integriert ist und/oder als optoelektronischer Abstandssensor (24) nach dem Prinzip des Lichtlaufzeitverfahrens ausgebildet ist.

7. Kamera (10) nach einem der vorhergehenden Ansprüche,
wobei die Steuer- und Auswertungseinheit (38) dafür ausgebildet ist, die Blende (17) für ein Objekt (48) anhand einer Funktion der erforderlichen Blende in Abhängigkeit von dem Abstand eines Objekts (48) einzustellen.

8. Kamera (10) nach einem der vorhergehenden Ansprüche,
wobei die Steuer- und Auswertungseinheit (38) für ein Einlernverfahren ausgebildet ist, bei dem ein Objekt (48) in einem Abstand angeordnet, Bilddaten aufgenommen, eine Bildschärfe geprüft und die Blende (17) verstellt wird, bis eine passende Blendeneinstellung für diesen Abstand gefunden ist.

9. Kamera (10) nach einem der vorhergehenden Ansprüche,
wobei die Empfangsoptik (16) die feste Fokuslage für einen maximalen Objektabstand aufweist.

10. Kamera (10) nach einem der vorhergehenden Ansprüche,
wobei die Steuer- und Auswertungseinheit (38) dafür ausgebildet ist, für ein Objekt (48) in einem der Fokuslage entsprechenden Abstand die Blende (17) auf eine maximale Blendenöffnung einzustellen und für abweichende, insbesondere kleinere Abstände die Blende (17) zunehmend zu schließen.

11. Kamera (10) nach einem der vorhergehenden Ansprüche,
wobei die Steuer- und Auswertungseinheit (38) dafür ausgebildet ist, die Blende (17) in Abhängigkeit von einer Helligkeit insbesondere der Bilddaten einzustellen.

12. Kamera (10) nach einem der vorhergehenden Ansprüche,
wobei die Blende (17) in der Empfangsoptik (16) verbaut oder auf die Empfangsoptik (16) aufgesetzt ist.

13. Kamera (10) nach einem der vorhergehenden Ansprüche,
die stationär an einer Fördereinrichtung (46) montiert ist, die zu erfassende Objekte (48) in einer Förderrichtung (50) durch den Erfassungsbereich (14) führt.

14. Verfahren zur Erfassung von durch einen Erfassungsbereich (14) bewegten Objekten (48), bei dem mit einem Bildsensor (18) durch eine Empfangsoptik (16) mit einer verstellbaren Blende (17) Bilddaten aufgenommen und die Bilddaten ausgelesen werden,
**dadurch gekennzeichnet,**
**dass** die Empfangsoptik (16) eine feste Fokuslage aufweist, dass mit einem Abstandssensor (24) ein Abstandswert zu einem Objekt (48) gemessen wird und dass die Blende (17) je Objekt (48) in Abhängigkeit eines für das Objekt (48) gemessenen Abstandswertes so eingestellt wird, dass das Objekt (48) in einem Tiefenschärfenbereich aufgenommen wird, in dem die aufgenommenen Bilddaten eine geforderte Bildschärfe erreichen.

**Claims**

1. A camera (10) for detecting objects (48) moving through a detection area (14), the camera (10) comprising an image sensor (18) for recording image data, receiving optics (16) having an adjustable diaphragm (17), and a control and evaluation unit (38) for reading out the image data and for adjusting the diaphragm (17),
**characterized in that** the receiving optics (16) comprise a fixed focus position, **in that** the camera (10) comprises a distance sensor (24) for measuring a distance value to an object (48), and **in that** the control and evaluation unit (38) is configured to set the diaphragm (17) per object (48) as a function of a distance value measured for the object (48), in such a way that the object (48) is recorded in a depth of field range where the recorded image data achieve a required image sharpness.

2. The camera (10) according to claim 1,
wherein the depth of field range is determined from application-specific requirements.

3. The camera (10) according to claim 1 or 2,
wherein the control and evaluation unit (38) is configured to read a code content of a code (52) on the object (48) with the aid of the image data.

4. The camera (10) according to claim 3,
wherein the object (48) is captured in the depth of field region when a code can be read from the captured image data.

**5.** The camera (10) according to claim 3 or 4,
wherein the required depth of field range depends on a code type, a module size, an exposure and/or a decoding method.

**6.** The camera (10) according to any of the preceding claims,
wherein the distance sensor (24) is integrated into the camera (10) and/or is configured as an optoelectronic distance sensor (24) according to the principle of the light time-of-flight method.

**7.** The camera (10) according to any of the preceding claims,
wherein the control and evaluation unit (38) is configured to adjust the diaphragm (17) for an object (48) based on a function of the required aperture depending on the distance of an object (48).

**8.** The camera (10) according to any of the preceding claims,
wherein the control and evaluation unit (38) is configured for a teach-in process wherein an object (48) is arranged at a distance, image data is recorded, an image sharpness is checked and the diaphragm (17) is adjusted until a suitable aperture setting for this distance is found.

**9.** The camera (10) according to any of the preceding claims,
wherein the receiving optics (16) has the fixed focus position for a maximum object distance.

**10.** The camera (10) according to any of the preceding claims,
wherein the control and evaluation unit (38) is configured to set the diaphragm (17) to a maximum aperture opening for an object (48) at a distance corresponding to the focus position and to increasingly close the diaphragm (17) for deviating, in particular smaller distances.

**11.** The camera (10) according to any of the preceding claims,
wherein the control and evaluation unit (38) is configured to adjust the diaphragm (17) as a function of a brightness, in particular of the image data.

**12.** The camera (10) according to any of the preceding claims,
wherein the diaphragm (17) is built into the receiving optics (16) or is mounted on the receiving optics (16).

**13.** The camera (10) according to any of the preceding claims,
that is stationarily mounted on a conveyor device (46) that guides objects (48) to be detected in a conveying direction (50) through the detection area (14).

**14.** A method for detecting objects (48) moving through a detection area (14),

wherein image data are recorded with an image sensor (18) through receiving optics (16) having an adjustable diaphragm (17), and the image data are read out,
**characterized in that** the receiving optics (16) comprise a fixed focus position, **in that** a distance value to an object (48) is measured with a distance sensor (24), and **in that** the diaphragm (17) per object (48) is set as a function of a distance value measured for the object (48) in such a way that the object (48) is recorded in a depth of field range where the recorded image data achieve a required image sharpness.

**Revendications**

**1.** Caméra (10) pour la détection d'objets (48) déplacés à travers une zone de détection (14), la caméra (10) comprenant un capteur d'image (18) pour l'enregistrement de données d'image, une optique de réception (16) avec un diaphragme réglable (17), ainsi qu'une unité de commande et d'évaluation (38) pour lire les données d'image et pour régler le diaphragme (17),
**caractérisée en ce que**
l'optique de réception (16) comprend une position focale fixe, **en ce que** la caméra (10) comprend un capteur de distance (24) pour mesurer une valeur de distance à un objet (48), et **en ce que** l'unité de commande et d'évaluation (38) est configurée pour régler le diaphragme (17) par objet (48) en fonction d'une valeur de distance mesurée pour l'objet (48), de telle sorte que l'objet (48) soit enregistré dans une zone de profondeur de champ dans laquelle les données d'image enregistrées atteignent une netteté d'image requise.

**2.** Caméra (10) selon la revendication 1,
dans laquelle la zone de profondeur de champ est déterminée à partir d'exigences spécifiques à l'application.

**3.** Caméra (10) selon la revendication 1 ou 2,
dans laquelle l'unité de commande et d'évaluation (38) est configurée pour lire le contenu d'un code (52) sur l'objet (48) à l'aide des données d'image.

**4.** Caméra (10) selon la revendication 3,
dans laquelle l'objet (48) est enregistré dans la zone de profondeur de champ lorsqu'un code peut être lu à partir des données d'image enregistrées.

**5.** Caméra (10) selon la revendication 3 ou 4,
dans laquelle la zone de profondeur de champ requise dépend d'un type de code, d'une taille de module, d'une exposition et/ou d'un procédé de décodage.

**6.** Caméra (10) selon l'une des revendications précédentes,
dans laquelle le capteur de distance (24) est intégré à la caméra (10) et/ou est configuré comme un capteur de distance optoélectronique (24) selon le principe du procédé du temps de vol de la lumière.

**7.** Caméra (10) selon l'une des revendications précédentes,
dans laquelle l'unité de commande et d'évaluation (38) est configurée pour régler le diaphragme (17) pour un objet (48) à l'aide d'une fonction de l'ouverture requise en fonction de la distance d'un objet (48).

**8.** Caméra (10) selon l'une des revendications précédentes,
dans laquelle l'unité de commande et d'évaluation (38) est configurée pour un processus d'apprentissage dans lequel un objet (48) est placé à une distance, des données d'image sont enregistrées, une netteté d'image est vérifiée et le diaphragme (17) est ajusté jusqu'à ce qu'un réglage d'ouverture approprié soit trouvé pour cette distance.

**9.** Caméra (10) selon l'une des revendications précédentes,
dans laquelle l'optique de réception (16) comprend la position focale fixe pour une distance maximale de l'objet.

**10.** Caméra (10) selon l'une des revendications précédentes,
dans laquelle l'unité de commande et d'évaluation (38) est configurée pour régler le diaphragme (17) sur une ouverture maximale pour un objet (48) à une distance correspondant à la position focale et pour fermer de plus en plus le diaphragme (17) pour des distances différentes, en particulier des distances plus petites.

**11.** Caméra (10) selon l'une des revendications précédentes,
dans laquelle l'unité de commande et d'évaluation (38) est configurée pour régler le diaphragme (17) en fonction d'une luminosité, en particulier des données d'image.

**12.** Caméra (10) selon l'une des revendications précédentes,
dans laquelle le diaphragme (17) est intégré dans l'optique de réception (16) ou est monté sur l'optique de réception (16).

**13.** Caméra (10) selon l'une des revendications précédentes,
qui est montée de manière stationnaire sur un dispositif de transport (46) qui guide les objets (48) à détecter dans une direction de transport (50) à travers la zone de détection (14).

**14.** Procédé de détection d'objets (48) déplacés à travers une zone de détection (14), dans lequel des données d'image sont enregistrées avec un capteur d'image (18) à travers une optique de réception (16) avec un diaphragme réglable (17), et les données d'image sont lues,
**caractérisé en ce que** l'optique de réception (16) comprend une position focale fixe, **en ce qu'**une valeur de distance à un objet (48) est mesurée avec un capteur de distance (24), et **en ce que** le diaphragme (17) par objet (48) est réglé en fonction d'une valeur de distance mesurée pour l'objet (48) de telle sorte que l'objet (48) soit enregistré dans une zone de profondeur de champ dans laquelle les données d'image enregistrées atteignent une netteté d'image requise.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018105301 A1
- DE 102020109928 B3
- DE 102020109929 B3
- US 7025271 B2
- US 20100310246 A1
- US 20120229674 A1
- US 20170310867 A1
- JP 2011151448 A
- US 9936119 B2

**In der Beschreibung aufgeführte Nicht-Patentliteratur**

- **VON SRINIVASAN ; PRATUL P. et al.** Aperture supervision for monocular depth estimation. *Proceedings of the IEEE Conference on Computer Vision and Pattern Recognition,* 2018